# EUROPEAN PATENT APPLICATION

(11) **EP 4 093 087 A1**
(43) Date of publication of application: **23.11.2022**
(21) Application number: 21174401.6
(22) Date of filing: 18.05.2021
(51) Int. Cl.: H04W 36/00, H04W 76/22

(54) **METHOD AND APPARATUS FOR USE IN COMMUNICATION SYSTEMS COMPRISING SERVING GATEWAY CONTROL PLANE FUNCTIONALITY**

(71) Applicant: Nokia Technologies Oy, 02610 Espoo (FI)
(72) Inventor: LANDAIS, Bruno, 22560 Pleumeur-Bodou (FR); GKELLAS, Georgios, GR-13232 Petroupoli (GR); THIEBAUT, Laurent, 92160 Antony (FR)
(74) Representative: Nokia EPO representatives

(57) **Abstract**

The disclosure describes an apparatus for directing, to a component currently implementing serving gateway control plane functionality for one or more existing data connections for a user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment. The apparatus receives, from the component currently implementing serving gateway control plane functionality, information identifying modified address and identifier of one or more user plane tunnels for uplink traffic from the user equipment to one or more components that implement serving gateway user plane functionality for the user equipment.

## Description

### TECHNICAL FIELD

The present disclosure relates to apparatus, a method, and a computer program, and in particular but not exclusively to apparatus, methods and computer programs for communication systems comprising serving gateway (SGW) control plane functionality.

### BACKGROUND

Control Plane and User Plane Separation (CUPS) may involve separating the user plane and control plane parts of a serving gateway (SGW) and a packet data network gateway (PGW). Uplink and/or downlink data for a user equipment (UE) may be directed through a component implementing eNB functionality for the UE, one or more components implementing SGW user plane (SGW-U) functionality for the UE, and one or more components implementing PGW user plane (PGW-U) functionality.

### SUMMARY

A method, comprising: directing, from a component currently and/or prospectively implementing mobile management entity functionality for a user equipment to a component currently implementing serving gateway control plane functionality for one or more existing data connections for the user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment; receiving, from the component currently implementing serving gateway control plane functionality, information identifying modified address and identifier of one or more user plane tunnels for uplink traffic from the user equipment to one or more components that implement serving gateway user plane functionality for the user equipment.

Directing location information and the support indication to the component currently implementing serving gateway control plane functionality may be performed for a user equipment for which user plane connectivity already exists between a component implementing NodeB functionality for the user equipment and one or more components that implement serving gateway user plane functionality for the user equipment or for which user plane connectivity is being established.

Directing location information and the support indication to the component currently implementing serving gateway control plane functionality may be done either (i) in preparation for directing an initial context set up request message from the component implementing mobile management entity functionality to a component implementing NodeB functionality for the user equipment, or (ii) in response to receiving an initial context set up complete message at the component implementing mobile management entity functionality.

The method may further comprise: including the modified address and identifier of one or more user plane tunnels for uplink traffic from the user equipment to one or more components that implement serving gateway user plane functionality for the user equipment in the initial context set up request message to the component implementing NodeB functionality for the user equipment.

The method may further comprise: including the modified address and identifier of one or more user plane tunnels for uplink traffic from the user equipment to one or more components that implement serving gateway user plane functionality for the user equipment in a request message to the component implementing NodeB functionality for the user equipment; wherein the request message requests modification of one or more radio access bearers for the user equipment.

Directing location information and the support indication to the component currently implementing serving gateway control plane functionality may be done between (a) receiving at the component implementing mobile management entity functionality from a component newly implementing NodeB functionality for the user equipment a request to newly direct downlink data for the user equipment to the component newly implementing NodeB functionality for the user equipment, and (b) sending acknowledgment of the request by the implementing mobile management entity functionality to the component newly implementing NodeB functionality for the user equipment.

The method may further comprise: including the modified address and identifier of one or more user plane tunnels for uplink traffic from the user equipment to the one or more components that implement serving gateway user plane functionality for the user equipment in an acknowledgment message to the component newly implementing NodeB functionality for the user equipment; wherein the acknowledgment message acknowledges the request to newly direct downlink data for the user equipment.

The method may further comprise: directing the location information about the user equipment and the support indication from the component implementing mobile management entity functionality to the component currently implementing serving gateway control plane functionality in response to receiving the request to newly direct downlink data for the user equipment to the component newly implementing NodeB functionality for the user equipment.

The component implementing mobile management entity functionality may be a target mobile management entity component for the user equipment, and directing location information and the support indication to the component currently implementing serving gateway control plane functionality may be in response to (a) receiving at the target mobile management entity component from a source mobile management entity component for the user equipment a forward relocation request, or (b) receiving a handover notify message at the target mobile management entity component from a component newly implementing NodeB functionality for the user equipment.

The method may further comprise: including the modified address and identifier of one or more user plane tunnels for uplink traffic from the user equipment to one or more components that implement serving gateway user plane functionality for the user equipment in a handover request message or in a request message requesting modification of one or more radio access bearers for the user equipment to the component newly implementing NodeB functionality for the user equipment.

A method, comprising: receiving, from a component currently or prospectively implementing mobile management entity functionality for the user equipment at a component currently implementing serving gateway control plane functionality for one or more existing data connections for the user equipment, location information about the user equipment and a support indication that the component currently implementing serving gateway control plane functionality is allowed to modify address and identifier of one or more user plane tunnels for uplink traffic from the user equipment to one or more components that implement serving gateway user plane functionality for the user equipment; reselecting one or more components that implement serving gateway user plane functionality for the user equipment based on the received location information about the user equipment; directing from the component currently implementing serving gateway control plane functionality to the component implementing mobile management entity functionality the modified address and identifier of one of more user plane tunnels for uplink traffic from the user equipment to one or more components that implement serving gateway user plane functionality for the user equipment.

The method may comprise receiving the location information and the support indication for a user equipment for which user plane connectivity already exists between a component implementing NodeB functionality for the user equipment and the one or more components that implement serving gateway user plane functionality for the user equipment or for which user plane connectivity is being established.

The method may comprise directing a request to a component implementing packet data network gateway control plane functionality for data connections between the user equipment and one or more data networks, wherein the request includes the modified address and identifier of one or more user plane tunnels for downlink traffic for the user equipment to one or more components that implement serving gateway user plane functionality for the user equipment.

A method comprising: receiving from a component implementing serving gateway control plane functionality for a user equipment information identifying a component implementing serving gateway user plane functionality for one or more data connections of the user equipment; directing, from a component implementing packet data network gateway control plane functionality for at least one data connection between the user equipment and at least one data network to another component, information for a data off-loading operation at the another component for traffic received from the component implementing the serving gateway user plane functionality.

The off-loading operation may comprise: receiving data for the at least one data connection between the user equipment and at least one data network from a component implementing serving gateway user plane functionality for the at least one data connection; directing some data for at least one data connection between the user equipment and the at least one data network to a component implementing packet data network gateway user plane functionality or 5G user plane functionality, and directing some other data for at least one data connection between the user equipment and the at least one data network to another component implementing packet data network gateway user plane functionality or 5G user plane functionality.

The another component implementing packet data network gateway user plane functionality or 5G user plane functionality may be co-located with or located close to the off-loading component to support local traffic offloading.

The off-loading component may be co-located with the component implementing serving gateway user plane functionality for the at least one data connection, or the off-loading component may be located close to the component implementing serving gateway user plane functionality for the at least one data connection.

The method may comprise: in response to receiving information about a change in the component implementing serving gateway user plane functionality for the at least one data connection: directing to the off-loading component one or more messages deactivating the off-loading operation at the off-loading component; and directing to another component one or more messages newly activating the off-loading operation at the another component.

The off-loading operation at the off-loading component may comprise: receiving data for the at least one data connection between the user equipment and at least one data network from a component implementing serving gateway user plane functionality for the at least one data connection; directing some data for the at least one data connection between the user equipment and at least one data network to a component implementing packet data network gateway user plane functionality or 5G user plane functionality, and directing some other data for the at least one data connection between the user equipment and at least one data network to another component implementing packet data network gateway user plane functionality or 5G user plane functionality.

The method may further comprise: directing, from the component implementing packet data network gateway control plane functionality to a component implementing a network repository function, a message identifying the component implementing serving gateway user plane functionality for the user equipment; and receiving from the component implementing a network repository function a response indicating a component associated with the component implementing serving gateway user plane functionality for the user equipment and capable of performing the off-loading operation.

A method comprising: receiving, at an off-loading component from a component implementing serving gateway user plane functionality for a user equipment, data for at least one data connection between the user equipment and at least one data network; directing some data for at least one data connection between the user equipment and at least one data network to a component implementing packet data network gateway user plane functionality, and directing some other data for at least one data connection between the user equipment and at least one data network to a another component implementing packet data network gateway user plane functionality .

The another component implementing packet data network gateway user plane functionality may be co-located or located close to the off-loading component to support local traffic offloading.

The off-loading component may be co-located with the component implementing serving gateway user plane functionality.

Apparatus, comprising: means for directing, to a component currently implementing serving gateway control plane functionality for one or more existing data connections for a user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment; means for receiving, from the component currently implementing serving gateway control plane functionality, information identifying modified address and identifier of one or more user plane tunnels for uplink traffic from the user equipment to one or more components that implement serving gateway user plane functionality for the user equipment.

Directing location information and the support indication to the component currently implementing serving gateway control plane functionality may be performed for a user equipment for which user plane connectivity already exists between a component implementing NodeB functionality for the user equipment and one or more components that implement serving gateway user plane functionality for the user equipment or for which user plane connectivity is being established.

Directing location information and the support indication to the component currently implementing serving gateway control plane functionality may be done either (i) in preparation for directing an initial context set up request message to a component implementing NodeB functionality for the user equipment, or (ii) in response to receiving an initial context set up complete message.

The apparatus may further comprise: means for including the modified address and identifier of one or more user plane tunnels for uplink traffic from the user equipment to one or more components that implement serving gateway user plane functionality for the user equipment in the initial context set up request message to the component implementing NodeB functionality for the user equipment.

The apparatus may further comprise: means for including the modified address and identifier of one or more user plane tunnels for uplink traffic from the user equipment to one or more components that implement serving gateway user plane functionality for the user equipment in a request message to the component implementing NodeB functionality for the user equipment; wherein the request message requests modification of one or more radio access bearers for the user equipment.

The apparatus may further comprise means for directing the location information and the support indication to the component currently implementing serving gateway control plane functionality between (a) receiving from a component newly implementing NodeB functionality for the user equipment a request to newly direct downlink data for the user equipment to the component newly implementing NodeB functionality for the user equipment, and (b) sending acknowledgment of the request to the component newly implementing NodeB functionality for the user equipment.

The apparatus may further comprise: means for including the modified address and identifier of one or more user plane tunnels for uplink traffic from the user equipment to the one or more components that implement serving gateway user plane functionality for the user equipment in an acknowledgment message to the component newly implementing NodeB functionality for the user equipment; wherein the acknowledgment message acknowledges the request to newly direct downlink data for the user equipment.

The apparatus may further comprise: means for directing the location information about the user equipment and the support indication to the component currently implementing serving gateway control plane functionality in response to receiving the request to newly direct downlink data for the user equipment to the component newly implementing NodeB functionality for the user equipment.

The apparatus may comprise a target mobile management entity component for the user equipment, and the apparatus may further comprise means for directing the location information and the support indication to the component currently implementing serving gateway control plane functionality in response to (a) receiving from a source mobile management entity component for the user equipment a forward relocation request, or (b) receiving a handover notify from a component newly implementing NodeB functionality for the user equipment.

The apparatus may further comprise: means for including the modified address and identifier of one or more user plane tunnels for uplink traffic from the user equipment to one or more components that implement serving gateway user plane functionality for the user equipment in a handover request message or in a request message requesting modification of one or more radio access bearers for the user equipment to the component newly implementing NodeB functionality for the user equipment.

Apparatus, comprising: means for receiving, from a component currently or prospectively implementing mobile management entity functionality for a user equipment, location information about the user equipment and a support indication that the apparatus is allowed to modify address and identifier of one or more user plane tunnels for uplink traffic from the user equipment to one or more components that implement serving gateway user plane functionality for the user equipment; reselecting one or more components that implement serving gateway user plane functionality for the user equipment based on the received location information about the user equipment; directing to the component implementing mobile management entity functionality the modified address and identifier of one of more user plane tunnels for uplink traffic from the user equipment to one or more components that implement serving gateway user plane functionality for the user equipment; wherein the apparatus comprises a component currently implementing serving gateway control plane functionality for one or more existing data connections for the user equipment.

The apparatus may comprise means for receiving the location information and the support indication for a user equipment for which user plane connectivity already exists between a component implementing NodeB functionality for the user equipment and the one or more components that implement serving gateway user plane functionality for the user equipment or for which user plane connectivity is being established.

The apparatus may comprise means for directing a request to a component implementing packet data network gateway control plane functionality for data connections between the user equipment and one or more data networks, wherein the request includes the modified address and identifier of one or more user plane tunnels for downlink traffic for the user equipment to one or more components that implement serving gateway user plane functionality for the user equipment.

Apparatus comprising: means for receiving from a component implementing serving gateway control plane functionality for a user equipment information identifying a component implementing serving gateway user plane functionality for one or more data connections of the user equipment; means for directing, to an off-loading component, information for a data off-loading operation at the off-loading component for traffic received from the component implementing the serving gateway user plane functionality.

The off-loading operation may comprise: receiving data for the at least one data connection between the user equipment and at least one data network from a component implementing serving gateway user plane functionality for the at least one data connection; directing some data for at least one data connection between the user equipment and the at least one data network to a component implementing packet data network gateway user plane functionality or 5G user plane functionality, and directing some other data for at least one data connection between the user equipment and the at least one data network to another component implementing packet data network gateway user plane functionality or 5G user plane functionality.

The another component implementing packet data network gateway user plane functionality or 5G user plane functionality may be co-located with or located close to the off-loading component to support local traffic offloading.

The off-loading component may be co-located with the component implementing serving gateway user plane functionality for the at least one data connection, or wherein the off-loading component is located close to the component implementing serving gateway user plane functionality for the at least one data connection.

The apparatus may comprise: means for, in response to receiving information about a change in the component implementing serving gateway user plane functionality for the at least one data connection: directing to the off-loading component one or more messages deactivating the off-loading operation at the off-loading component; and directing to another off-loading component one or more messages newly activating the off-loading operation at the another off-loading component.

The off-loading operation at the off-loading component may comprise: receiving data for the at least one data connection between the user equipment and at least one data network from a component implementing serving gateway user plane functionality for the at least one data connection; directing some data for the at least one data connection between the user equipment and at least one data network to a component implementing packet data network gateway user plane functionality or 5G user plane functionality, and directing some other data for the at least one data connection between the user equipment and at least one data network to another component implementing packet data network gateway user plane functionality or 5G user plane functionality.

The apparatus may comprise means for directing, to a component implementing a network repository function, a message identifying the component implementing serving gateway user plane functionality for the user equipment; and receiving from the component implementing a network repository function a response indicating a component associated with the component implementing serving gateway user plane functionality for the user equipment and capable of performing the off-loading operation.

Apparatus comprising: means for receiving, from a component implementing serving gateway user plane functionality for a user equipment, data for at least one data connection between the user equipment and at least one data network; means for directing some data for at least one data connection between the user equipment and at least one data network to a component implementing packet data network gateway user plane functionality, and directing some other data for at least one data connection between the user equipment and at least one data network to a another component implementing packet data network gateway user plane functionality.

The apparatus may be co-located with or close to the another component implementing packet data network gateway user plane functionality to support local traffic offloading.

The apparatus may be co-located with the component implementing serving gateway user plane functionality.

An apparatus comprising: at least one processor; and at least one memory including computer program code, the at least one memory and computer program code configured to, with the at least one processor, cause the apparatus to perform: directing, to a component currently implementing serving gateway control plane functionality for one or more existing data connections for a user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment; and receiving, from the component currently implementing serving gateway control plane functionality, information identifying modified address and identifier of one or more user plane tunnels for uplink traffic from the user equipment to one or more components that implement serving gateway user plane functionality for the user equipment.

Directing location information and the support indication to the component currently implementing serving gateway control plane functionality may be performed for a user equipment for which user plane connectivity already exists between a component implementing NodeB functionality for the user equipment and one or more components that implement serving gateway user plane functionality for the user equipment or for which user plane connectivity is being established.

Directing location information and the support indication to the component currently implementing serving gateway control plane functionality may be done either (i) in preparation for directing an initial context set up request message to a component implementing NodeB functionality for the user equipment, or (ii) in response to receiving an initial context set up complete message.

The at least one memory and computer program code may be configured to, with the at least one processor, cause the apparatus to include the modified address and identifier of one or more user plane tunnels for uplink traffic from the user equipment to one or more components that implement serving gateway user plane functionality for the user equipment in the initial context set up request message to the component implementing NodeB functionality for the user equipment.

The at least one memory and computer program code may be configured to, with the at least one processor, cause the apparatus to include the modified address and identifier of one or more user plane tunnels for uplink traffic from the user equipment to one or more components that implement serving gateway user plane functionality for the user equipment in a request message to the component implementing NodeB functionality for the user equipment; wherein the request message requests modification of one or more radio access bearers for the user equipment.

The at least one memory and computer program code may be configured to, with the at least one processor, cause the apparatus to direct the location information and the support indication to the component currently implementing serving gateway control plane functionality between (a) receiving from a component newly implementing NodeB functionality for the user equipment a request to newly direct downlink data for the user equipment to the component newly implementing NodeB functionality for the user equipment, and (b) sending acknowledgment of the request to the component newly implementing NodeB functionality for the user equipment.

The at least one memory and computer program code may be configured to, with the at least one processor, cause the apparatus to include the modified address and identifier of one or more user plane tunnels for uplink traffic from the user equipment to the one or more components that implement serving gateway user plane functionality for the user equipment in an acknowledgment message to the component newly implementing NodeB functionality for the user equipment; wherein the acknowledgment message acknowledges the request to newly direct downlink data for the user equipment.

The at least one memory and computer program code may be configured to, with the at least one processor, cause the apparatus to direct the location information about the user equipment and the support indication to the component currently implementing serving gateway control plane functionality in response to receiving the request to newly direct downlink data for the user equipment to the component newly implementing NodeB functionality for the user equipment.

The apparatus may comprise a target mobile management entity component for the user equipment, and the at least one memory and computer program code may be configured to, with the at least one processor, cause the apparatus to direct the location information and the support indication to the component currently implementing serving gateway control plane functionality in response to (a) receiving from a source mobile management entity component for the user equipment a forward relocation request, or (b) receiving a handover notify from a component newly implementing NodeB functionality for the user equipment.

The at least one memory and computer program code may be configured to, with the at least one processor, cause the apparatus to include the modified address and identifier of one or more user plane tunnels for uplink traffic from the user equipment to one or more components that implement serving gateway user plane functionality for the user equipment in a handover request message or in a request message requesting modification of one or more radio access bearers for the user equipment to the component newly implementing NodeB functionality for the user equipment.

An apparatus comprising: at least one processor; and at least one memory including computer program code, the at least one memory and computer program code configured to, with the at least one processor, cause the apparatus to perform: receiving, from a component currently or prospectively implementing mobile management entity functionality for a user equipment, location information about the user equipment and a support indication that the apparatus is allowed to modify address and identifier of one or more user plane tunnels for uplink traffic from the user equipment to one or more components that implement serving gateway user plane functionality for the user equipment; reselecting one or more components that implement serving gateway user plane functionality for the user equipment based on the received location information about the user equipment; and directing to the component implementing mobile management entity functionality the modified address and identifier of one of more user plane tunnels for uplink traffic from the user equipment to one or more components that implement serving gateway user plane functionality for the user equipment; wherein the apparatus comprises a component currently implementing serving gateway control plane functionality for one or more existing data connections for the user equipment.

The at least one memory and computer program code may be configured to, with the at least one processor, cause the apparatus to receive the location information and the support indication for a user equipment for which user plane connectivity already exists between a component implementing NodeB functionality for the user equipment and the one or more components that implement serving gateway user plane functionality for the user equipment or for which user plane connectivity is being established.

The at least one memory and computer program code may be configured to, with the at least one processor, cause the apparatus to direct a request to a component implementing packet data network gateway control plane functionality for data connections between the user equipment and one or more data networks, wherein the request includes the modified address and identifier of one or more user plane tunnels for downlink traffic for the user equipment to one or more components that implement serving gateway user plane functionality for the user equipment.

An apparatus comprising: at least one processor; and at least one memory including computer program code, the at least one memory and computer program code configured to, with the at least one processor, cause the apparatus to perform: receiving from a component implementing serving gateway control plane functionality for a user equipment information identifying a component implementing serving gateway user plane functionality for one or more data connections of the user equipment; and directing, to an off-loading component, information for a data off-loading operation at the off-loading component for traffic received from the component implementing the serving gateway user plane functionality.

The off-loading operation may comprise: receiving data for the at least one data connection between the user equipment and at least one data network from a component implementing serving gateway user plane functionality for the at least one data connection; directing some data for at least one data connection between the user equipment and the at least one data network to a component implementing packet data network gateway user plane functionality or 5G user plane functionality, and directing some other data for at least one data connection between the user equipment and the at least one data network to another component implementing packet data network gateway user plane functionality or 5G user plane functionality.

The another component implementing packet data network gateway user plane functionality or 5G user plane functionality may be co-located with or located close to the off-loading component to support local traffic offloading.

The off-loading component may be co-located with the component implementing serving gateway user plane functionality for the at least one data connection, or wherein the off-loading component is located close to the component implementing serving gateway user plane functionality for the at least one data connection.

The at least one memory and computer program code may be configured to, with the at least one processor, cause the apparatus to, in response to receiving information about a change in the component implementing serving gateway user plane functionality for the at least one data connection, direct to the off-loading component one or more messages deactivating the off-loading operation at the off-loading component, and direct to another off-loading component one or more messages newly activating the off-loading operation at the another off-loading component.

The off-loading operation at the off-loading component may comprise: receiving data for the at least one data connection between the user equipment and at least one data network from a component implementing serving gateway user plane functionality for the at least one data connection; directing some data for the at least one data connection between the user equipment and at least one data network to a component implementing packet data network gateway user plane functionality or 5G user plane functionality, and directing some other data for the at least one data connection between the user equipment and at least one data network to another component implementing packet data network gateway user plane functionality or 5G user plane functionality.

The at least one memory and computer program code may be configured to, with the at least one processor, cause the apparatus to: direct, to a component implementing a network repository function, a message identifying the component implementing serving gateway user plane functionality for the user equipment; and receive from the component implementing a network repository function a response indicating a component associated with the component implementing serving gateway user plane functionality for the user equipment and capable of performing the off-loading operation.

An apparatus comprising: at least one processor; and at least one memory including computer program code, the at least one memory and computer program code configured to, with the at least one processor, cause the apparatus to perform: receiving, from a component implementing serving gateway user plane functionality for a user equipment, data for at least one data connection between the user equipment and at least one data network; directing some data for at least one data connection between the user equipment and at least one data network to a component implementing packet data network gateway user plane functionality, and directing some other data for at least one data connection between the user equipment and at least one data network to a another component implementing packet data network gateway user plane functionality.

The apparatus may be co-located with or close to the another component implementing packet data network gateway user plane functionality to support local traffic offloading.

The apparatus may be co-located with the component implementing serving gateway user plane functionality.

Apparatus, comprising: directing circuitry for directing, to a component currently implementing serving gateway control plane functionality for one or more existing data connections for a user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment; receiving circuitry for receiving, from the component currently implementing serving gateway control plane functionality, information identifying modified address and identifier of one or more user plane tunnels for uplink traffic from the user equipment to one or more components that implement serving gateway user plane functionality for the user equipment.

Apparatus, comprising: receiving circuitry for receiving, from a component currently or prospectively implementing mobile management entity functionality for a user equipment, location information about the user equipment and a support indication that the apparatus is allowed to modify address and identifier of one or more user plane tunnels for uplink traffic from the user equipment to one or more components that implement serving gateway user plane functionality for the user equipment; reselecting circuitry for reselecting one or more components that implement serving gateway user plane functionality for the user equipment based on the received location information about the user equipment; directing circuitry for directing to the component implementing mobile management entity functionality the modified address and identifier of one of more user plane tunnels for uplink traffic from the user equipment to one or more components that implement serving gateway user plane functionality for the user equipment; wherein the apparatus comprises a component currently implementing serving gateway control plane functionality for one or more existing data connections for the user equipment.

Apparatus comprising: receiving circuitry for receiving from a component implementing serving gateway control plane functionality for a user equipment information identifying a component implementing serving gateway user plane functionality for one or more data connections of the user equipment; directing circuitry for directing, to an off-loading component, information for a data off-loading operation at the off-loading component for traffic received from the component implementing the serving gateway user plane functionality.

Apparatus comprising: receiving circuitry for receiving, from a component implementing serving gateway user plane functionality for a user equipment, data for at least one data connection between the user equipment and at least one data network; directing circuitry for directing some data for at least one data connection between the user equipment and at least one data network to a component implementing packet data network gateway user plane functionality, and directing some other data for at least one data connection between the user equipment and at least one data network to a another component implementing packet data network gateway user plane functionality.

A computer readable medium comprising program instructions stored thereon for performing: directing, from a component currently and/or prospectively implementing mobile management entity functionality for a user equipment to a component currently implementing serving gateway control plane functionality for one or more existing data connections for the user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment; receiving, from the component currently implementing serving gateway control plane functionality, information identifying modified address and identifier of one or more user plane tunnels for uplink traffic from the user equipment to one or more components that implement serving gateway user plane functionality for the user equipment.

A computer readable medium comprising program instructions stored thereon for performing: receiving, from a component currently or prospectively implementing mobile management entity functionality for the user equipment at a component currently implementing serving gateway control plane functionality for one or more existing data connections for the user equipment, location information about the user equipment and a support indication that the component currently implementing serving gateway control plane functionality is allowed to modify address and identifier of one or more user plane tunnels for uplink traffic from the user equipment to one or more components that implement serving gateway user plane functionality for the user equipment; reselecting one or more components that implement serving gateway user plane functionality for the user equipment based on the received location information about the user equipment; directing from the component currently implementing serving gateway control plane functionality to the component implementing mobile management entity functionality the modified address and identifier of one of more user plane tunnels for uplink traffic from the user equipment to one or more components that implement serving gateway user plane functionality for the user equipment.

A computer readable medium comprising program instructions stored thereon for performing: receiving from a component implementing serving gateway control plane functionality for a user equipment information identifying a component implementing serving gateway user plane functionality for one or more data connections of the user equipment; directing, from a component implementing packet data network gateway control plane functionality for at least one data connection between the user equipment and at least one data network to another component, information for a data off-loading operation at the another component for traffic received from the component implementing the serving gateway user plane functionality.

A computer readable medium comprising program instructions stored thereon for performing: receiving, at an off-loading component from a component implementing serving gateway user plane functionality for a user equipment, data for at least one data connection between the user equipment and at least one data network; directing some data for at least one data connection between the user equipment and at least one data network to a component implementing packet data network gateway user plane functionality, and directing some other data for at least one data connection between the user equipment and at least one data network to a another component implementing packet data network gateway user plane functionality.

A computer program comprising computer executable code which when run on at least one processor is configured to cause an apparatus at least to: direct, to a component currently implementing serving gateway control plane functionality for one or more existing data connections for a user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment; receive, from the component currently implementing serving gateway control plane functionality, information identifying modified address and identifier of one or more user plane tunnels for uplink traffic from the user equipment to one or more components that implement serving gateway user plane functionality for the user equipment.

A computer program comprising computer executable code which when run on at least one processor is configured to cause an apparatus at least to: receive, from a component currently or prospectively implementing mobile management entity functionality for a user equipment, location information about the user equipment and a support indication that the apparatus is allowed to modify address and identifier of one or more user plane tunnels for uplink traffic from the user equipment to one or more components that implement serving gateway user plane functionality for the user equipment; reselect one or more components that implement serving gateway user plane functionality for the user equipment based on the received location information about the user equipment; direct to the component implementing mobile management entity functionality the modified address and identifier of one of more user plane tunnels for uplink traffic from the user equipment to one or more components that implement serving gateway user plane functionality for the user equipment; wherein the apparatus comprises a component currently implementing serving gateway control plane functionality for one or more existing data connections for the user equipment.

A computer program comprising computer executable code which when run on at least one processor is configured to cause an apparatus at least to: receive from a component implementing serving gateway control plane functionality for a user equipment information identifying a component implementing serving gateway user plane functionality for one or more data connections of the user equipment; direct, to an off-loading component, information for a data off-loading operation at the off-loading component for traffic received from the component implementing the serving gateway user plane functionality.

A computer program comprising computer executable code which when run on at least one processor is configured to cause an apparatus at least to: receive, from a component implementing serving gateway user plane functionality for a user equipment, data for at least one data connection between the user equipment and at least one data network; direct some data for at least one data connection between the user equipment and at least one data network to a component implementing packet data network gateway user plane functionality, and directing some other data for at least one data connection between the user equipment and at least one data network to a another component implementing packet data network gateway user plane functionality.

A non-transitory computer readable medium comprising program instructions stored thereon for performing: directing, from a component currently and/or prospectively implementing mobile management entity functionality for a user equipment to a component currently implementing serving gateway control plane functionality for one or more existing data connections for the user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment; receiving, from the component currently implementing serving gateway control plane functionality, information identifying modified address and identifier of one or more user plane tunnels for uplink traffic from the user equipment to one or more components that implement serving gateway user plane functionality for the user equipment.

A non-transitory computer readable medium comprising program instructions stored thereon for performing: receiving, from a component currently or prospectively implementing mobile management entity functionality for the user equipment at a component currently implementing serving gateway control plane functionality for one or more existing data connections for the user equipment, location information about the user equipment and a support indication that the component currently implementing serving gateway control plane functionality is allowed to modify address and identifier of one or more user plane tunnels for uplink traffic from the user equipment to one or more components that implement serving gateway user plane functionality for the user equipment; reselecting one or more components that implement serving gateway user plane functionality for the user equipment based on the received location information about the user equipment; directing from the component currently implementing serving gateway control plane functionality to the component implementing mobile management entity functionality the modified address and identifier of one of more user plane tunnels for uplink traffic from the user equipment to one or more components that implement serving gateway user plane functionality for the user equipment.

A non-transitory computer readable medium comprising program instructions stored thereon for performing: receiving from a component implementing serving gateway control plane functionality for a user equipment information identifying a component implementing serving gateway user plane functionality for one or more data connections of the user equipment; directing, from a component implementing packet data network gateway control plane functionality for at least one data connection between the user equipment and at least one data network to another component, information for a data off-loading operation at the another component for traffic received from the component implementing the serving gateway user plane functionality.

A non-transitory computer readable medium comprising program instructions stored thereon for performing: receiving, at an off-loading component from a component implementing serving gateway user plane functionality for a user equipment, data for at least one data connection between the user equipment and at least one data network; directing some data for at least one data connection between the user equipment and at least one data network to a component implementing packet data network gateway user plane functionality, and directing some other data for at least one data connection between the user equipment and at least one data network to a another component implementing packet data network gateway user plane functionality.

In the above, many different aspects have been described. It should be appreciated that further aspects may be provided by the combination of any two or more of the aspects described above.

Various other aspects are also described in the following detailed description and in the attached claims.

### BRIEF DESCRIPTION OF THE FIGURES

Some example embodiments will now be described in further detail, by way of example only, with reference to the following examples and accompanying drawings, in which:
Figure 1 shows a representation of components of a communication system according to example embodiments;
Figure 2 shows a representation of an example of operations at a component implementing MME functionality according to an example embodiment;
Figure 3 shows a representation of an example of a wider set of operations including the operations of Figure 2;
Figure 4 shows a representation of an example of operations at a component implementing MME functionality according to an example embodiment;
Figure 5 shows an example of a wider set of operations including the operations of Figure 4;
Figure 6 shows a representation of an example of operations at a component implementing MME functionality according to an example embodiment;
Figure 7 shows a representation of an example of a wider set of operations including the operations of Figure 6;
Figure 8 shows a representation of an example of operations at a component implementing MME functionality according to an example embodiment;
Figure 9 shows a representation of an example of operations at a component implementing MME functionality according to an example embodiment;
Figure 10 shows a representation of an example of a wider set of operations that may include the operations of Figure 8 or Figure 9;
Figures 11 and 12 show a representation of an example of operations according to an example embodiment;
Figure 13 shows a representation of an example of a definition of type Upflnfo according to an example embodiment;
Figure 14 shows a representation of apparatus for implementing operations according to some example embodiments; and
Figure 15 shows a representation of non-volatile memory media;

### DETAILED DESCRIPTION

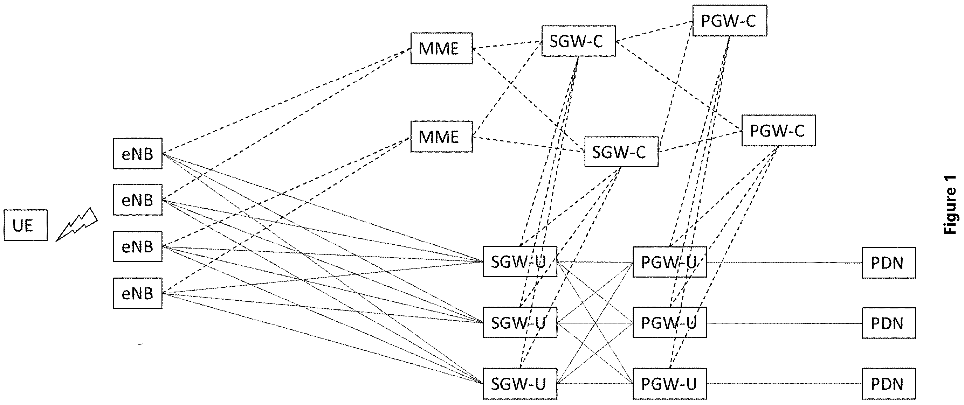

With reference to Figure 1, a LTE (Long Term Evolution) communications system may comprise a number of components each capable of implementing one or more network functions. Figure 1 shows separation between all components, but there may be co-location of some components. For any UE, the communications system may comprise: (a) a plurality of components capable of implementing eNodeB (eNB) functionality for the UE; (b) a plurality of components capable of implementing mobility management entity (MME) functionality for the UE; (c) a plurality of components capable of implementing SGW-C functionality for the UE; (d) a plurality of components capable of implementing SGW-U functionality for the UE; (e) a plurality of components capable of implementing PGW-C functionality for the UE; and (f) a plurality of components capable of implementing PGW-U functionality for the UE. Which components are used at a particular time to implement each function for the UE may depend on a plurality of factors, such as, for example: the location of the UE (such as e.g. the identity of the cell and/or eNB component serving the UE); and the packet data networks (PDNs) with which the UE has a data connection.

In Figure 1, the dashed lines between components indicate control plane connections, and the solid lines between components indicate user plane connections.

A component implementing SGW-U functionality for a UE is the user/data plane ingress and egress point for the UE between the radio access network (Evolved UMTS Terrestrial Radio Access Network (E-UTRAN)) and the Evolved Packet Core (EPC). If the UE has data connections to multiple packet data networks (PDNs) via the EPC, the UE may be supported by multiple components implementing SGW-U functionality. SGW-U functionality may also comprise lawful interception of UE traffic, inter-operator accounting, and downlink data buffering during paging of a UE.

S1-U is the reference point between E-UTRAN and SGW for the per bearer user plane tunnelling and inter eNodeB path switching during handover.

SGW-C functionality comprises controlling the one or more components that implement the SGW-U functionality for the UE. The UE is served by a single component implementing SGW-C functionality; and (as mentioned above) the SGW-C function may comprise controlling a plurality of components implementing SGW-U functionality for respective PDN connections.

S1 Application Protocol (S1AP) is used between the component implementing eNB functionality for the UE and the component implementing MME functionality for the UE in order to support operations such as E-RAB (E-UTRAN Radio Access Bearer) management, transfer of UE context information, NAS (Non Access Stratum) signalling transport, paging and EPC based mobility.

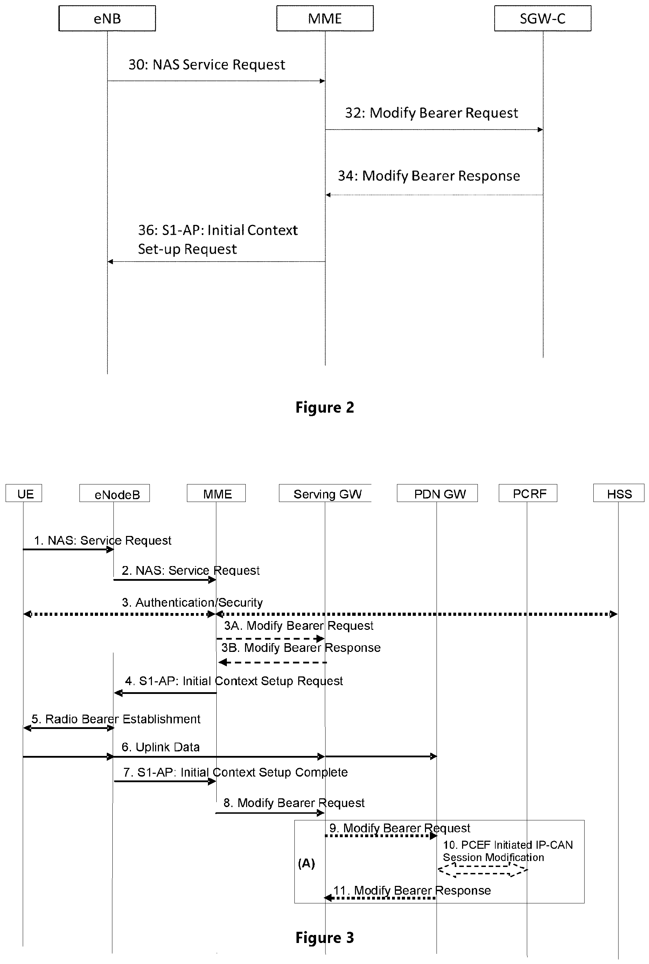

Figure 2 shows an example of operations at a component implementing MME functionality (hereafter referred to as the MME component) for the UE, according to an example embodiment. The MME component receives (OPERATION 30) a NAS service request message from the UE via the component implementing eNB functionality (hereafter referred to as the eNB component) for the UE. The NAS service request comprises a request to establish user plane radio bearers for the UE.

In response to receiving the NAS service request, the MME component determines whether to interact with the component currently implementing SGW-C functionality (hereafter referred to as the SGW-C component) for one or more existing PDU sessions for the UE, before directing a S1-AP Initial Context Setup Request message to the eNB component. This determination may, for example, be based on operator policy, and may refer to a record of the tracking areas (identified by Tracking Area Identifiers (TAIs)) visited by the UE. This determination at the MME component may be guided by information previously received from the SGW-C component. For example, the SGW-C component may have provided the MME component with a list of TAIs for which the MME component should first interact with the SGW-C component (before directing a S1-AP Initial Context Setup Request message to the eNB component). For example, this list may comprise a list of TAIs in which traffic offloading (discussed further below) may be supported.

In response to receiving the NAS service request and making a determination to first interact with the SGW-C component, the MME component directs (OPERATION 32) a Modify Bearer Request message to the SGW-C component. The Modify Bearer Request message indicates the UE location (e.g. via ECGI and TAI). The ECGI (E-UTRAN Cell Global Identifier) indicates the location of the UE by identifying the cell serving the UE. The TAI indicates the location of the UE by identifying the Tracking Area in which the UE is located. The TAI comprises a PLMN (public land mobile network) identifier unique to the system operator and a tracking area code (TAC) unique to the Tracking Area within the PLMN.

The Modify Bearer Request message also indicates an option for the SGW-C component to change the one or more components providing SGW-U functionality for the UE. For example, the Modify Bearer Request may include a 'Change F-TEID support Indication' flag as specified in 3GPP TS 29.274, and may set this flag to "1".

The MME component receives (OPERATION 34) a Modify Bearer Response message in reply to the Modify Bearer Request message. The Modify Bearer Response message indicates the one or more SGW-U components (using SGW-U S1 Fully Qualified Tunnel Endpoint Identifiers (F-TEIDs)) to use for each of one or more bearers of the PDN connection to which the NAS service request relates.

In response to receiving the Modify Bearer Response message, the MME component updates the SGW-U information stored at the MME component for the UE, to indicate the SGW-U S1 F-TEIDs indicated in Modify Bearer Response message. The SGW-U S1 F-TEIDs may or may not be the same as the F-TEIDs currently stored for the UE at the MME component, depending on whether or not the SGW-C component decided to select one or more new components for implementing SGW-U functionality for the UE.

The MME component directs (OPERATION 36) a S1-AP Initial Context Setup Request message to the eNB component. The S1-AP Initial Context Setup Request message indicates the SGW-U S1 F-TEIDs newly stored for the UE at the MME component (i.e. the SGW-U S1 F-TEIDs received at the MME component from the SGW-C component).

This updated SGW-U information included in the S1-AP Initial Context Setup Request message determines the one or more SGW-U components to which the eNB component will direct uplink user data from the UE.

Figure 3 shows an example of a wider set of operations of which the operations of Figure 2 may form part. In Figure 3, the SGW includes both the SGW-C and SGW-U components, and the PGW includes both the PGW-C and PGW-U components. Operations 30, 32, 34 and 36 in Figure 2 correspond to operations 2, 3A, 3B and 4, respectively, in Figure 3.

The above-described technique facilitates the off-loading of UE uplink data at a component close to the eNB component, and thereby facilitates Edge computing in EPC. The above-described technique does this without adding an extra S1AP interaction between the MME component and eNodeB component even in scenarios where the SGW-C component determines to change the one or more SGW-U components for the UE.

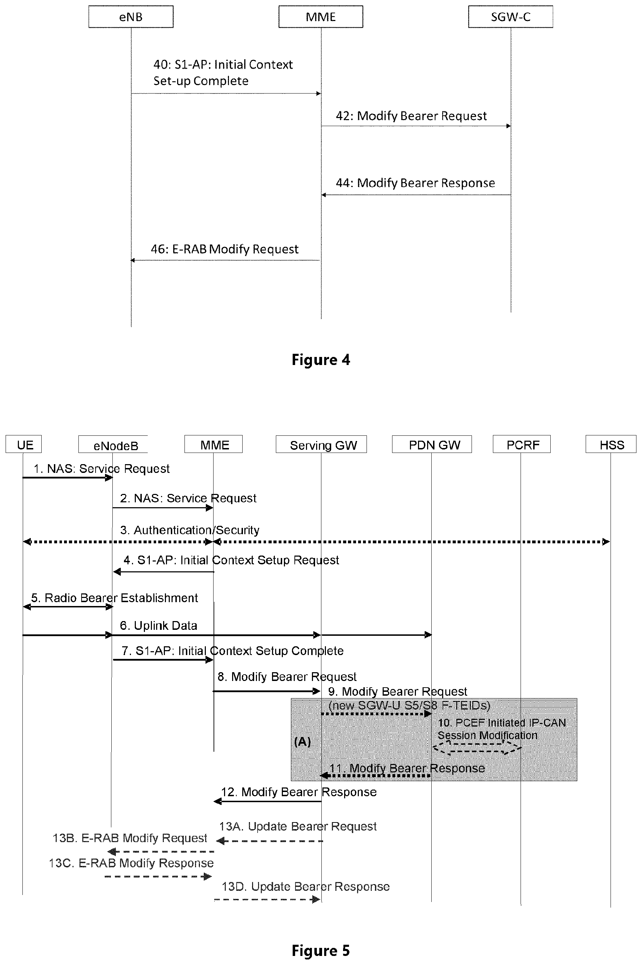

Figure 4 shows another example of operations at the MME component for the UE, according to an example embodiment. The MME component has previously sent a S1-AP Initial Context Setup Request message to the eNB component for the UE, and receives (OPERATION 40) a S1-AP: Initial Context Set-up Complete message from the eNB component.

In response to receiving the S1-AP: Initial Context Set-up Complete message, the MME component interacts with the component currently implementing SGW-C functionality for one or more PDU sessions for the UE to provide the eNB S1-U F-TEIDs (i.e. Fully qualified TEIDs, i.e. IP address and GTP-U Tunnel Endpoint Identifier) received from the eNB in the S1-AP: Initial Context Set-up Complete message and to be used by the SGW-U for downlink data transfer towards the UE.

The Modify Bearer Request message (OPERATION 42) indicates the eNB S1-U F-TEIDs and UE location (e.g. via ECGI and TAI).

The Modify Bearer Request message also indicates an option for the SGW-C component to change the one or more components providing SGW-U functionality for the UE. For example, the Modify Bearer Request may include a 'Change F-TEID support Indication' flag as specified in 3GPP TS 29.274, and may set this flag to "1".

The MME component receives (OPERATION 44) a Modify Bearer Response message in reply to the Modify Bearer Request message. The Modify Bearer Response message indicates the one or more SGW-U components (using SGW-U S1 Fully Qualified Tunnel Endpoint Identifiers (F-TEIDs)) to use for each of one or more bearers of the PDN connection to which the NAS service request relates.

In response to receiving the Modify Bearer Response message, the MME component updates the SGW-U information stored at the MME component for the UE, to indicate the SGW-U S1 F-TEIDs indicated in the Modify Bearer Response message. The SGW-U S1 F-TEIDs may or may not be the same as the F-TEIDs currently stored for the UE at the MME component, depending on whether or not the SGW-C component decided to select one or more new components for implementing SGW-U functionality for the UE.

If The SGW-U S1 F-TEIDs are not the same as the F-TEIDs previously stored at the MME (i.e. not the same as those that were sent to the eNB in the S1AP Initial Context Setup Request), the MME directs (OPERATION 46) an E-RAB Modify Request message to the eNB component. The E-RAB Modify Request message indicates the SGW-U S1 F-TEIDs newly stored for the UE at the MME component (i.e. the SGW-U S1 F-TEIDs received at the MME component from the SGW-C component).

This updated SGW-U information included in the E-RAB Modify Request message determines the one or more SGW-U components to which the eNB component will direct uplink user data from the UE. In an another embodiment, as described in Figure 5, the SGW-C component sends an Update Bearer Request to the MME component to update the MME component with new SGW S1-U F-TEIDs, when the SGW-C component decides to select one or more new components for implementing SGW-U functionality for the UE.

Figure 5 shows an example of a wider set of operations of which the operations of Figure 4 may form part. In Figure 5, the SGW includes both the SGW-C and SGW-U components, and the PGW includes both the PGW-C and PGW-U components. Operations 40, 42, 44 and 46 in Figure 4 correspond to operations 7, 8, 12 and 13B, respectively, in Figure 5.

As shown in Figure 5, the wider set of operations comprises operations at the SGW-C component in response to a determination (based e.g. on the UE location) to use one or more new components to implement the SGW-U functionality for the UE, e.g. to select an SGW-U that is closer to the new UE location. The SGW-C component takes actions to deactivate SGW-U functionality for the UE at the one or more de-selected SGW-U components to thereby free resources for other UEs at these de-selected SGW-U components.

In response to a determination to select one or more new components for implementing the SGW-U functionality for the UE, the SGW-C component directs a Modify Bearer Request message (message 9 in Figure 5) to the one or more components implementing PGW-C functionality for the UE (hereafter referred to as the PGW-C component). The Modify Bearer Request message includes the SGW-U S5/S8 F-TEIDs for the one or more SGW-U components newly selected for the UE at the SGW-C. Additionally, the SGW-C component directs a Update Bearer Request message (message 13A in Figure 5) to the MME component, including the SGW-U S1 -F-TEIDs for the one or more SGW-U components to be stored by the MME component and sent to the eNB component for use for the sending of uplink traffic for the UE. Upon receipt of an Update Bearer Request including modified SGW-U S1-U F-TEIDs, the MME component stores the SGW-U S1-U F-TEIDs and initiates an E-RAB modification procedure towards the eNB component to update the eNB component with the SGW-U S1-F-TEIDs to use for uplink traffic for this UE.

The above-described technique also facilitates the off-loading of UE uplink data at a component close to the eNB component, and thereby facilitates Edge computing in EPC solution. The above-described technique (in both Figures 4 and 5) achieves this without adding an extra Modify Bearer Request from the MME to the SGW-C in response to a NAS service request.

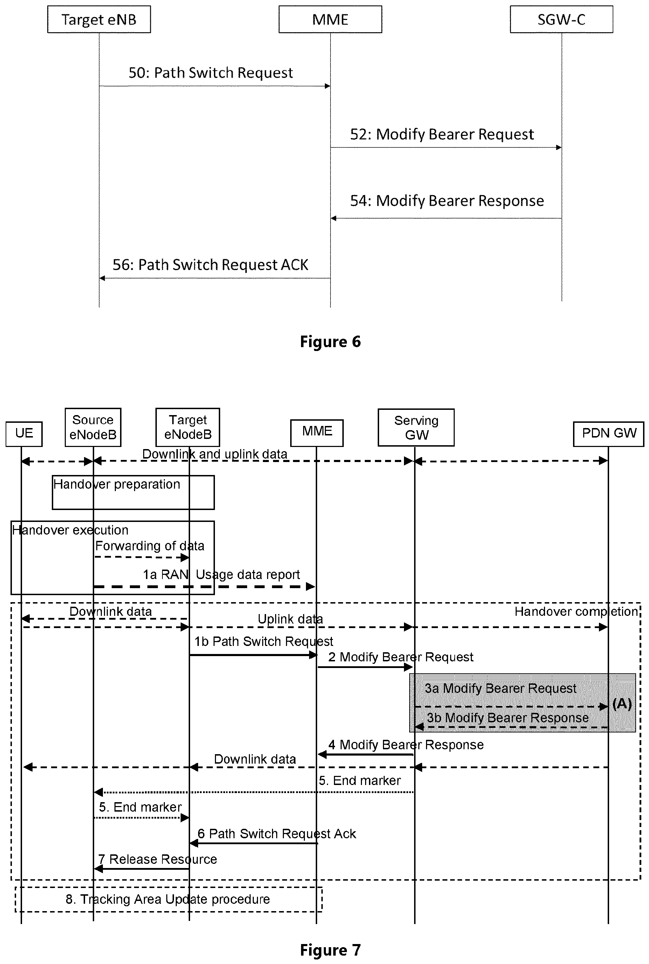

Figure 6 illustrates another example of operations at a component implementing MME functionality for the UE both before and after a handover of the UE to a new eNB component (target eNB component) from an old eNB component (source eNB component).

The MME component receives (OPERATION 50) a Path Switch Request message from the target eNB component. The Path Switch Request message constitutes a request to newly direct downlink data for the UE to the target eNB component (instead of to the source eNB component).

In response to receiving the Path Switch Request message, the MME component directs (OPERATION 52) a Modify Bearer Request message to the component currently implementing SGW-C functionality for one or more PDU sessions for the UE. The Modify Bearer Request message indicates the target eNB S1-U F-TEIDs for downlink data transfer for this UE, the UE location (as in the techniques described above), and also indicates an option for the SGW-C component to select one or more new components to implement SGW-U functionality for the UE. For example, the Modify Bearer Request may include a 'Change F-TEID support Indication' flag as specified in 3GPP TS 29.274, and may set this flag to "1".

In reply to the Modify Bearer Request message, the MME component receives (OPERATION 54) a Modify Bearer Response message from the SGW-C component. The Modify Bearer Response message identifies (using SGW-U S1 F-TEIDs) the one or more component selected by the SGW-C component to implement SGW-U functionality for the UE.

In response to receiving the Modify Bearer Response message, the MME component updates the SGW-U information stored at the MME component for the UE, to indicate the SGW-U S1 F-TEIDs indicated in Modify Bearer Response message from the SGW-C component. The SGW-U S1 F-TEIDs may or may not be the same as the F-TEIDs currently stored for the UE at the MME component, depending on whether or not the SGW-C component decided to select one or more new components for implementing SGW-U functionality for the UE.

The MME directs (OPERATION 56) a Path Switch Request ACK message to the target eNB component. The Path Switch Request ACK message indicates the one or more SGW-U S1 F-TEIDs newly stored for the UE at the MME component (i.e. the one or more SGW-U S1 F-TEIDs received at the MME component from the SGW-C component).

This updated SGW-U information included in the Path Switch Request ACK message determines the one or more SGW-U components to which the target eNB component will direct uplink user data from the UE.

Figure 7 shows an example of a wider set of operations of which the operations of Figure 6 may form part. In Figure 7, the SGW includes both the SGW-C and SGW-U components, and the PGW includes both the PGW-C and PGW-U components. Operations 50, 52, 54 and 56 in Figure 6 correspond to operations 1b, 2, 4 and 6, respectively, in Figure 7.

As shown in Figure 7, the wider set of operations comprises operations at the SGW-C component in response to a determination (based e.g. on the UE location) to use one or more new components to implement the SGW-U functionality for the UE. For example, the SGW-C component directs a Modify Bearer Request to the one or more components implementing PGW-C functionality for the UE. This Modify Bearer Request identifies the one or more SGW-U components newly selected for the UE (by including SGW-U S5/S8 F-TEIDs for the new SGW-U components).

The above-described technique facilitates relocation of SGW-U functionality in the event of an X2 handover without relocation of SGW-C functionality.

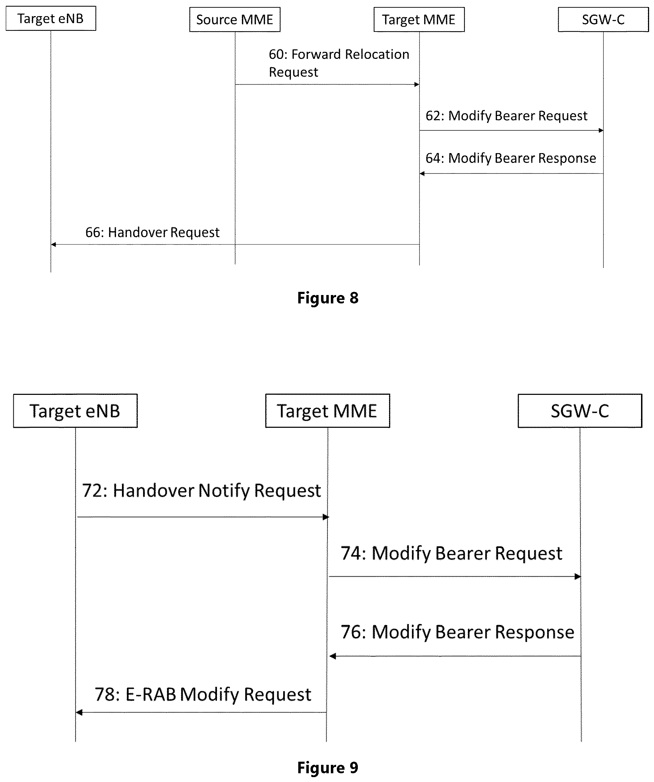

Figure 8 illustrates an example of operations at a component prospectively implementing MME functionality (target MME component) for the UE in the event of a handover of the UE to a target eNB component from a source eNB component.

The target MME component for the UE receives (OPERATION 60) a Forward Relocation Request message from the component currently implementing MME functionality (source MME component) for the UE.

In response to receiving the Forward Relocation Request message, the target MME component determines, based on operator policy (e.g. dependent on the change in TAI for the UE) whether or not to interact with the component currently implementing SGW-C functionality for one or more PDU sessions for the UE.

In response to receiving the Forward Relocation Request message and a determination to interact with the SGW-C component for the UE, the target MME component directs (OPERATION 62) a Modify Bearer Request message to the SGW-C component for the UE. The Modify Bearer Request message indicates the UE location (as in the techniques described above), and also indicates an option for the SGW-C to select one or more new components to implement SGW-U functionality for the UE. For example, the Modify Bearer Request may include a 'Change F-TEID support Indication' flag as specified in 3GPP TS 29.274, and may set this flag to "1".

In reply to the Modify Bearer Request message, the target MME component receives (OPERATION 64) a Modify Bearer Response message from the SGW-C component for the UE.

The Modify Bearer Response message identifies (using SGW-U S1 F-TEIDs) the one or more component selected by the SGW-C component to implement SGW-U functionality for the UE.

In response to receiving the Modify Bearer Response message, the target MME component stores the SGW-U S1 F-TEIDs indicated in the Modify Bearer Response message as SGW-U information for the UE.

The target MME component directs (OPERATION 66) a handover request message to the target eNB component. The handover request message indicates the one or more SGW-U S1 F-TEIDs stored for the UE at the target MME component (i.e. the one or more SGW-U S1 F-TEIDs received at the target MME component from the SGW-C component).

This SGW-U information included in the handover request message determines the one or more SGW-U components to which the target eNB component will direct uplink user data from the UE.

Figure 9 illustrates another example of operations at a component newly implementing MME functionality for the UE in the event of a handover to a new eNB component (referred to as target eNB component before handover) with a change in MME component. The new and old eNB components (referred to as target and source eNB components before handover) are associated with different MME components.

In response to receiving (OPERATION 72) a Handover Notify message from the new eNB component for the UE, the new MME component (target MME component) directs (OPERATION 74) a Modify Bearer Request message to the component currently implementing SGW-C functionality for one or more PDU sessions for the UE. The Modify Bearer Request message indicates the UE location (as in the techniques described above), and also indicates an option for the SGW-C component to select one or more new components to implement SGW-U functionality for the UE. For example, the Modify Bearer Request may include a 'Change F-TEID support Indication' flag as specified in 3GPP TS 29.274, and may set this flag to "1".

In reply to the Modify Bearer Request message, the new MME component receives (OPERATION 76) a Modify Bearer Response message from the SGW-C component for the UE.

The Modify Bearer Response message identifies (using SGW-U S1 F-TEIDs) the one or more components selected by the SGW-C component to implement SGW-U functionality for the UE.

In response to receiving the Modify Bearer Response message, the new MME component stores the SGW-U S1 F-TEIDs indicated in the Modify Bearer Response message as SGW-U information for the UE.

If the SGW-U S1 F-TEIDs were changed by the SGW-C component, the new MME component directs (OPERATION 78) an E-RAB Modify Request message to the new eNB component. The E-RAB Modify Request message indicates the one or more SGW-U S1 F-TEIDs stored for the UE at the new MME component (i.e. the one or more SGW-U S1 F-TEIDs received at the new MME component from the SGW-C component).

This SGW-U information included in the E-RAB Modify Request message determines the one or more SGW-U components to which the new eNB component will direct uplink user data from the UE.

In another embodiment, the SGW-C component may trigger a change of the SGW S1-U F-TEIDs towards the new MME component and new eNB component by sending an Update Bearer Request to the new MME component including the new SGW S1-U F-TEIDs, instead of sending this information in the Modify Bearer Response (OPERATION 76 of Figure 9). Upon receipt of an Update Bearer Request from the SGW-C component including modified SGW S1-U F-TEIDs, the new MME component initiates an E-RAB modification procedure to update the new eNB component with the modified SGW S1-U F-TEIDs to use for the uplink traffic of the UE.

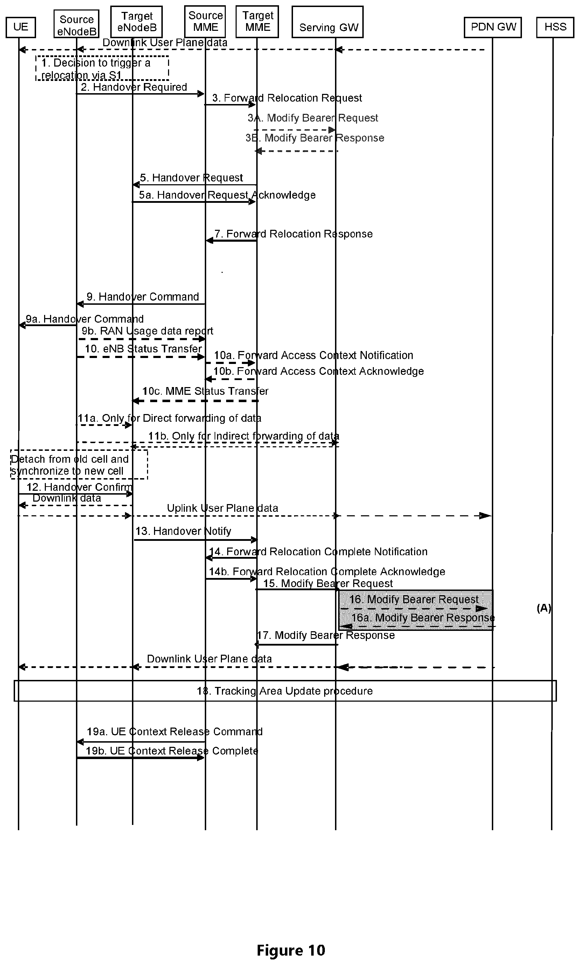

Figure 10 shows an example of a wider set of operations of which the operations of Figures 8 and 9 may form part. In Figure 10, the SGW includes both the SGW-C and SGW-U components, and the PGW includes both the PGW-C and PGW-U components. Operations 60, 62, 64 and 66 in Figure 8 correspond to operations 3, 3a, 3b and 5, respectively, in Figure 10. The operations 72, 74 and 76 in Figure 9 map to operations 13, 15 and 17 in Figure 10, and operation 78 in Figure 9 is not shown in Figure 10.

As shown in Figure 10, the wider set of operations comprises operations at the SGW-C component in response to a determination (based e.g. on the UE location) to use one or more new components to implement the SGW-U functionality for the UE. For example, the SGW-C component directs a Modify Bearer Request to the one or more components implementing PGW-C functionality for the UE. This Modify Bearer Request identifies the one or more SGW-U components newly selected for the UE (by including SGW-U S5/S8 F-TEIDs for the new SGW-U components).

The above-described technique facilitates relocation of SGW-U functionality in the event of an S1 handover without relocation of SGW-C functionality.

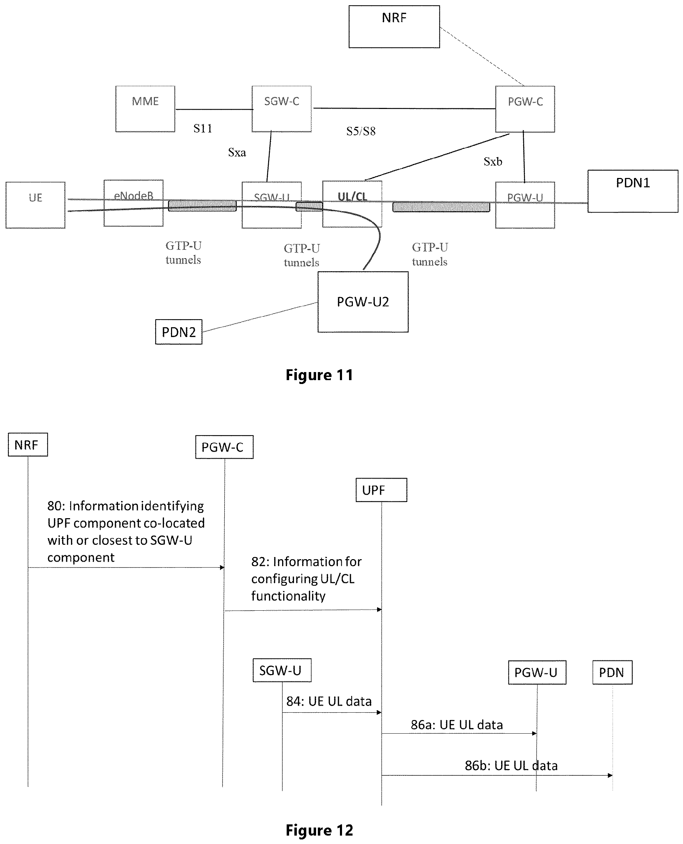

Figures 11 and 12 show a representation of an example of operations according to an example embodiment. These operations may, for example, be used in combination with any of the techniques described above for selecting one or more SGW-U components for the UE to facilitate e.g. Edge computing.

A component implementing PGW-C functionality for the UE (hereafter referred to as PGW-C component) selects a network component (hereafter referred to as UL/CL component) to implement Uplink Classifier (UL/CL) functionality for the UE. The PGW-C component directs (OPERATION 82) to the UL/CL component one or more messages including information about how the UL/CL component is to process UE uplink data received from the SGW-U component for the UE (e.g. to divert certain application traffic to a local PGW component for local traffic offloading, and route the rest of the uplink traffic of the UE to a central PGW component). The SGW-U component for the UE is configured to direct UE uplink data to this UL/CL component (OPERATION 84); and the UL/CL component is configured (by the information received from the PGW-C component) to perform the following operations on the UE uplink data received from the SGW-U component: (i) direct UE uplink data for a first PDN to a component implementing PGW-U functionality for a data connection between the UE and the first PDN (OPERATION 86a); and (ii) offload UE uplink data for a second PDN to the second PDN (OPERATION 86b) via a second component implementing PGW-U functionality. The second component may, for example, be co-located with the UL/CL component.

The component selected by the PGW-C component to implement UL/CL functionality for the UE may be close to or co-located with the SGW-U component for the UE. This may facilitate a low latency data connection between the UE and the second PDN2. The term "close to" in the previous sentence may be interpreted in the sense of edge colocation, according to which services or the like are deployed in de-centralized locations or location closer to the service consumer. For example, the component implementing UL/CL functionality may be located in an area which is closer to the SGW-U component than the area where said component would be deployed in a conventional architecture.

In the event of the SGW-U functionality for the UE moving to another network component (because e.g. of a change in the location of the UE), the SGW-C component for the UE may inform the PGW-C component of the name/identity of the new SGW-U component selected for the UE. The SGW-C component may direct a GTP-C (GPRS Tunnelling Protocol for the Control plane) Modify Bearer Request over the S5/S8 interface to the PGW-C component, and the Modify Bearer Request may include a new SGW-U Node Name information element (IE) as follows:

| | | | | |
|---|---|---|---|---|
| SGW-U node name | CO | The SGW-C may include this IE on the S5/S8 interface, if available. | FQDN | 0 |

In response to receiving this message, the PGW-C component may determine to select a different network component to implement the UL/CL functionality for the UE. The PGW-C component may discover a network component that is capable of implementing UL/CL functionality and is local to the SGW-U component for the UE, by consuming a service provided by a network repository function (NRF), which provides a centralised store of information about network components.

The communications system may additionally include components implementing 5G core (5GC) functions; and a component implementing 5G UPF may be used to implement the UL/CL functionality.

The component implementing the NRF stores information about the profile of a plurality of UPF components, and the profile for each UPF component may include information identifying the SGW-U component that the UPF is closest to, or with which the UPF component is co-located.

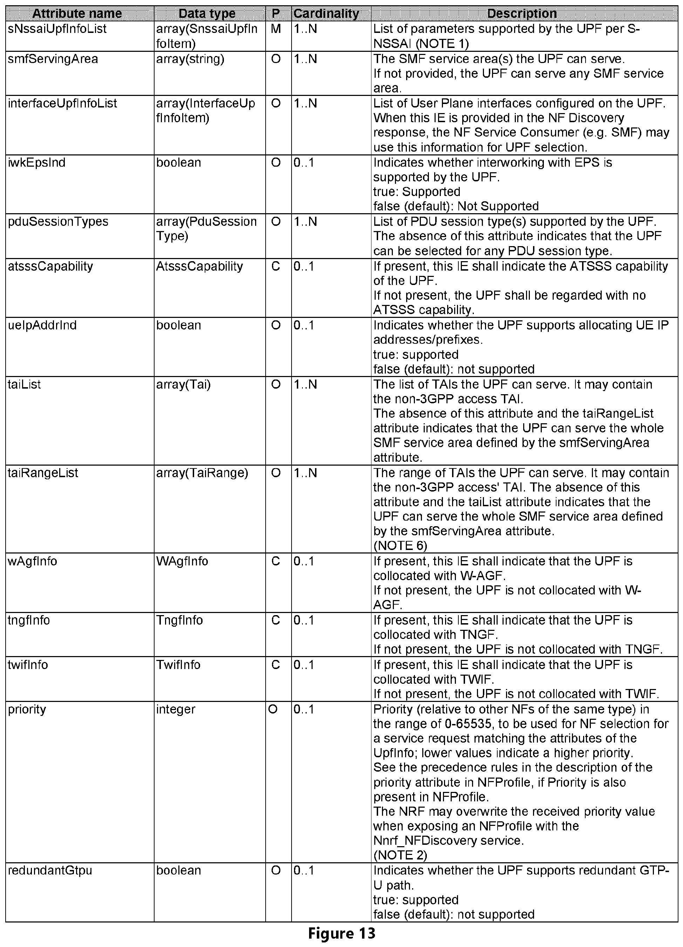

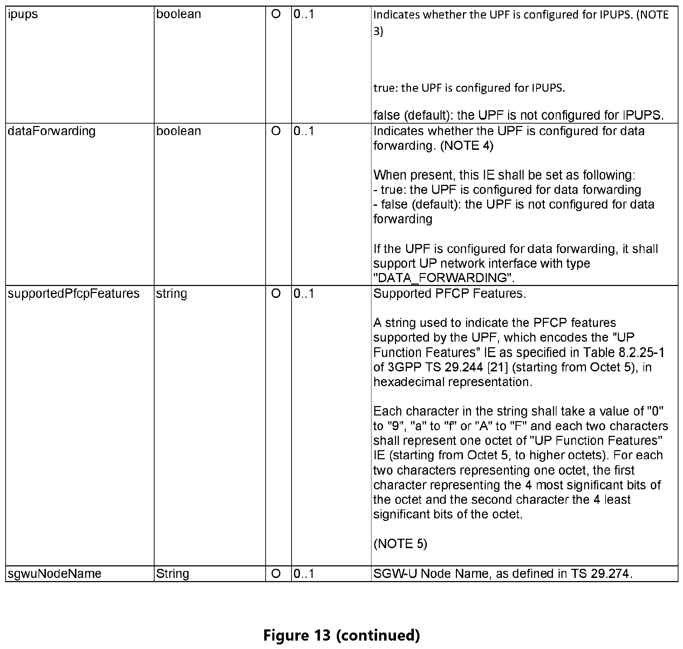

This may be done e.g. by using the Upflnfo data type shown in Figure 13, which is a modified version of the Upfinfo data type specified in 3GPP TS 29.510. Alternatively, the existing FQDN (Fully Qualified Domain Name) attribute of the network function profile specified in 3GPP TS 29.510 may be used.

The PGW-C component may discover a UPF component capable of implementing UL/CL functionality and co-located with (or close to) the SGW-U component for the UE by issuing (OPERATION 80) an NF (network function) Discovery Request to the NRF component with a new sgwu-node-name query parameter (or with the existing fqdn query parameter) set to the SGW-U Node Name for the SGW-U component for the UE.

The PGW-C component configures the UL/CL component to exchange GTP-u traffic with the SGW-U component for the UE using EPC specifications i.e. with one GTP-u (GPRS Tunnelling Protocol for User plane) Tunnel per EPC bearer (per QoS class) and not using 5GC specifications i.e. not using one GTP-u Tunnel per PDU Session (any QoS class) .

When the SGW-U component and the UL/CL component are co-located in the form of a combo node, this combo node may be controlled by two PFCP (Packet Forwarding Control Protocol) sessions: one session from the SGW-c component and one session from a component implementing 5G SMF (session management function) and PGW-C functionality. There may be a standard S5-u interface or virtual S5-u interface between the SGW-U and PGW-U components.

For all the above-described techniques: in the event that the SGW-C component selects a new component to implement SGW-U functionality, the de-selected SGW-U component continues to handle the transient phase where the eNB component and the PGW-U component continue to send UL and DL data, respectively, to the deselected SGW-U component. Once new UL and DL data start to be received at the new SGW-U component, the SGW-C component releases the old SGW-U component from providing SGW-U functionality for the UE. This is done while ensuring that UL packets are delivered in order (i.e. waiting for all UL packets received on the old GTP-U tunnel by the old, deselected SGW-U component, before authorizing the new SGW-U component to send UL data to the new PGW-U component for the data connection). The eNB component may send GTP-U End Marker packets on the old GTP-U tunnels between the eNB component and the SGW-U component before it switches sending UL traffic to the new GTP-U tunnels; likewise, the PGW-U component may send GTP-U End Marker packets on the old GTP-U tunnels between the PGW-U component and the SGW-U component before it switches sending DL traffic to the new GTP-U tunnels. SGW-C requests the old (de-selected) SGW-U component to report when End Marker Packets are received on the respective GTP-U tunnels from the eNB component and from the PGW-U component at the old, deselected SGW-U component. In response to receiving these reports from the old, deselected SGW-U component, the SGW-C component opens the gate for the transfer of UL and DL packets respectively at the new SGW-U component. When this has been done for both the UL and DL traffic, the SGW-C component can release the resources that were allocated in the old, deselected SGW-U component for the PDN connection.

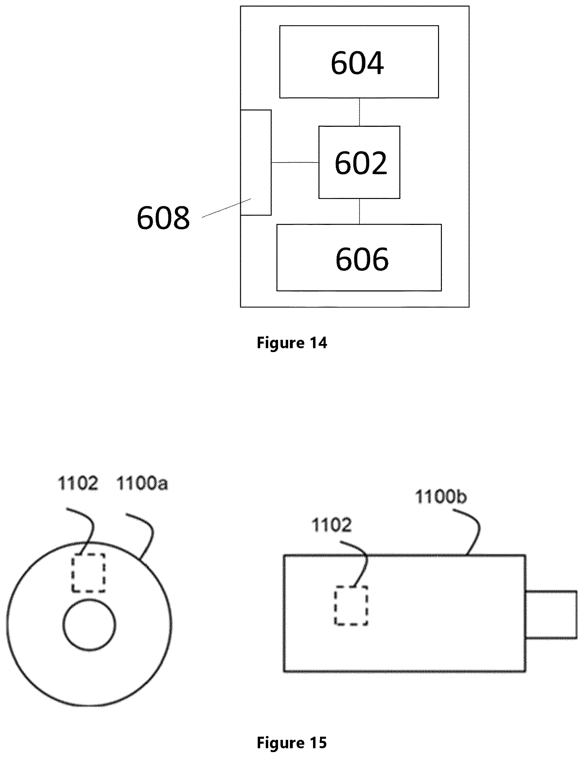

Figure 14 illustrates an example of hardware for implementing any component in the embodiments described above. The apparatus may comprise at least one processor 602 coupled to one or more interfaces 608 to one or more other components of the communications system. The at least one processor 602 executes a software implementing the operations described above. The software code may be stored in a memory 606 coupled to the processor 602.

The apparatus of figure 14 may be implemented in each of the components described with reference with the previous figures. In further realizations, the components described with reference to the previous figures may be implemented by the apparatus of figure 14.

Figure 15 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allow the processor to perform one or more of the steps of the methods described previously.

It is to be noted that embodiments of the present disclosure may be implemented as circuitry, in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as the base stations or user equipment of the above-described embodiments.

As used in this application, the term "circuitry" refers to all of the following: (a) hardware- only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as the user equipment or base stations of the above-described embodiments, to perform various functions) and (c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

## Claims

1. Apparatus, comprising:
means for directing, to a component currently implementing serving gateway control plane functionality for one or more existing data connections for a user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment;
means for receiving, from the component currently implementing serving gateway control plane functionality, information identifying modified address and identifier of one or more user plane tunnels for uplink traffic from the user equipment to one or more components that implement serving gateway user plane functionality for the user equipment.

2. The apparatus according to claim 1, wherein directing location information and the support indication to the component currently implementing serving gateway control plane functionality is performed for a user equipment for which user plane connectivity already exists between a component implementing NodeB functionality for the user equipment and one or more components that implement serving gateway user plane functionality for the user equipment or for which user plane connectivity is being established.

3. The apparatus according to claim 2, wherein directing location information and the support indication to the component currently implementing serving gateway control plane functionality is done either (i) in preparation for directing an initial context set up request message to a component implementing NodeB functionality for the user equipment, or (ii) in response to receiving an initial context set up complete message.

4. The apparatus according to claim 2 or claim 3, further comprising: means for including the modified address and identifier of one or more user plane tunnels for uplink traffic from the user equipment to one or more components that implement serving gateway user plane functionality for the user equipment in the initial context set up request message to the component implementing NodeB functionality for the user equipment.

5. The apparatus according to claim 3, further comprising: means for including the modified address and identifier of one or more user plane tunnels for uplink traffic from the user equipment to one or more components that implement serving gateway user plane functionality for the user equipment in a request message to the component implementing NodeB functionality for the user equipment; wherein the request message requests modification of one or more radio access bearers for the user equipment.

6. The apparatus according to claim 1 or claim 2, comprising means for directing the location information and the support indication to the component currently implementing serving gateway control plane functionality between (a) receiving from a component newly implementing NodeB functionality for the user equipment a request to newly direct downlink data for the user equipment to the component newly implementing NodeB functionality for the user equipment, and (b) sending acknowledgment of the request to the component newly implementing NodeB functionality for the user equipment.

7. The apparatus according to claim 6, further comprising: means for including the modified address and identifier of one or more user plane tunnels for uplink traffic from the user equipment to the one or more components that implement serving gateway user plane functionality for the user equipment in an acknowledgment message to the component newly implementing NodeB functionality for the user equipment; wherein the acknowledgment message acknowledges the request to newly direct downlink data for the user equipment.

8. The apparatus according to claim 6 or claim 7, comprising: means for directing the location information about the user equipment and the support indication to the component currently implementing serving gateway control plane functionality in response to receiving the request to newly direct downlink data for the user equipment to the component newly implementing NodeB functionality for the user equipment.

9. The apparatus according to claim 1, wherein the apparatus comprises a target mobile management entity component for the user equipment, and wherein the apparatus comprises means for directing the location information and the support indication to the component currently implementing serving gateway control plane functionality in response to (a) receiving from a source mobile management entity component for the user equipment a forward relocation request, or (b) receiving a handover notify from a component newly implementing NodeB functionality for the user equipment.

10. The apparatus according to claim 9, further comprising: means for including the modified address and identifier of one or more user plane tunnels for uplink traffic from the user equipment to one or more components that implement serving gateway user plane functionality for the user equipment in a handover request message or in a request message requesting modification of one or more radio access bearers for the user equipment to the component newly implementing NodeB functionality for the user equipment.

11. Apparatus, comprising:
means for receiving, from a component currently or prospectively implementing mobile management entity functionality for a user equipment, location information about the user equipment and a support indication that the apparatus is allowed to modify address and identifier of one or more user plane tunnels for uplink traffic from the user equipment to one or more components that implement serving gateway user plane functionality for the user equipment;
reselecting one or more components that implement serving gateway user plane functionality for the user equipment based on the received location information about the user equipment;
directing to the component implementing mobile management entity functionality the modified address and identifier of one of more user plane tunnels for uplink traffic from the user equipment to one or more components that implement serving gateway user plane functionality for the user equipment;
wherein the apparatus comprises a component currently implementing serving gateway control plane functionality for one or more existing data connections for the user equipment.

12. The apparatus according to claim 11, comprising means for directing a request to a component implementing packet data network gateway control plane functionality for data connections between the user equipment and one or more data networks, wherein the request includes the modified address and identifier of one or more user plane tunnels for downlink traffic for the user equipment to one or more components that implement serving gateway user plane functionality for the user equipment.

13. Apparatus comprising:
means for receiving from a component implementing serving gateway control plane functionality for a user equipment information identifying a component implementing serving gateway user plane functionality for one or more data connections of the user equipment;
means for directing, to an off-loading component, information for a data off-loading operation at the off-loading component for traffic received from the component implementing the serving gateway user plane functionality.

14. The apparatus according to claim 13, wherein the off-loading component is co-located with the component implementing serving gateway user plane functionality for the at least one data connection, or wherein the off-loading component is located close to the component implementing serving gateway user plane functionality for the at least one data connection.

15. The apparatus according to claim 13 or 14, comprising: means for, in response to receiving information about a change in the component implementing serving gateway user plane functionality for the at least one data connection: directing to the off-loading component one or more messages deactivating the off-loading operation at the off-loading component; and directing to another off-loading component one or more messages newly activating the off-loading operation at the another off-loading component.

16. The apparatus according to claim 15, comprising means for directing, to a component implementing a network repository function, a message identifying the component implementing serving gateway user plane functionality for the user equipment; and receiving from the component implementing a network repository function a response indicating a component associated with the component implementing serving gateway user plane functionality for the user equipment and capable of performing the off-loading operation.

17. Apparatus comprising:
means for receiving, from a component implementing serving gateway user plane functionality for a user equipment, data for at least one data connection between the user equipment and at least one data network;
means for directing some data for at least one data connection between the user equipment and at least one data network to a component implementing packet data network gateway user plane functionality, and directing some other data for at least one data connection between the user equipment and at least one data network to a another component implementing packet data network gateway user plane functionality.

18. A method, comprising:
directing, from a component currently and/or prospectively implementing mobile management entity functionality for a user equipment to a component currently implementing serving gateway control plane functionality for one or more existing data connections for the user equipment, location information about the user equipment and a support indication that the component currently implementing serving gateway control plane functionality is allowed to modify an address and identifier of one or more user plane tunnels for uplink traffic from the user equipment to one or more components that implement serving gateway user plane functionality for the user equipment;
receiving, from the component currently implementing serving gateway control plane functionality, information identifying modified address and identifier of one or more user plane tunnels for uplink traffic from the user equipment to one or more components that implement serving gateway user plane functionality for the user equipment.

19. A method, comprising:
receiving, from a component currently or prospectively implementing mobile management entity functionality for the user equipment at a component currently implementing serving gateway control plane functionality for one or more existing data connections for the user equipment, location information about the user equipment and a support indication that the component currently implementing serving gateway control plane functionality is allowed to modify address and identifier of one or more user plane tunnels for uplink traffic from the user equipment to one or more components that implement serving gateway user plane functionality for the user equipment;
reselecting one or more components that implement serving gateway user plane functionality for the user equipment based on the received location information about the user equipment;
directing from the component currently implementing serving gateway control plane functionality to the component implementing mobile management entity functionality the modified address and identifier of one of more user plane tunnels for uplink traffic from the user equipment to one or more components that implement serving gateway user plane functionality for the user equipment.
